Europäisches Patentamt

European Patent Office

Office européen des brevets

(19)

(11) Publication number: 0 391 587
A2

## (12) EUROPEAN PATENT APPLICATION

(21) Application number: 90303208.4

(22) Date of filing: 27.03.90

(51) Int. Cl.⁵: G06F 15/70

(30) Priority: 31.03.89 US 331441

(43) Date of publication of application:
10.10.90 Bulletin 90/41

(84) Designated Contracting States:
DE FR GB IT

(71) Applicant: MINNESOTA MINING AND
MANUFACTURING COMPANY
3M Center, P.O. Box 33427
St. Paul Minnesota 55133(US)

(72) Inventor: Waltz, Frederick M., c/o Minnesota
Mining
Manufac. Co., 2501 Hudson Road, P.O. Box
33427
St. Paul, Minnesota 55133-3427(US)
Inventor: Schultz, John C., c/o Minnesota
Mining
Manufac. Co., 2501 Hudson Road, P.O. Box
33427
St. Paul, Minnesota 55133-3427(US)

(74) Representative: Baillie, Iain Cameron et al
c/o Ladas & Parry Isartorplatz 5
D-8000 München 2(DE)

(54) Method and apparatus for fast generation of warping coefficients.

(57) A polynomial warp of a first image for comparison with a second image is performed by precalculating and storing a matrix for use in determining the warping coefficients. A group of control points is preselected in the second image and located in the first image. The matrix products of the precalculated matrix and each of two column vectors containing the coordinates of the control points in the first image are calculated. The results of this matrix multiplication are two column vectors containing the warping coefficients. Those coefficients are then used to perform the image warping.

FIG.11

# METHOD AND APPARATUS FOR FAST GENERATION OF WARPING COEFFICIENTS

## Background of the Invention

As manufacturing systems become increasingly automated, a common desire is to extend such automation techniques to the inspection process. Where such inspection is primarily of a visual nature, significant difficulties exist. Such difficulties arise, for example, inspecting whether a picture has been properly printed onto a sheet of paper. Another example of an area where such problems exist is in the inspection of printed circuits, where the inspector must determine whether conductor traces have been positioned correctly and that there are no scratches or other causes of open circuits in those traces.

In order to perform such a visual inspection, a digitized image of a sample known to be correct or a composite of many such images is stored. Such an image is known as a "golden image." A digitized image of a sample being inspected is then subtracted from the golden image. If the two are identical, the subtraction will leave a value of zero at all points. In real world situations a result of zero at all points from such a subtraction is extremely unlikely. Therefore an error range around zero will be selected and, if the subtraction yields values within the error range, the article under inspection is deemed good. Otherwise the article is rejected.

In order to perform an inspection of the type described above, the images must first be properly registered. That is, if the image of the article under inspection is offset even slightly from that of the golden image, the subtraction may yield a high value at many points even though the article under inspection is good. The registration process may be made more difficult if the unit under inspection is at an angle with respect to the viewing apparatus. If that is the case, a perspective correction must be introduced. Furthermore, an even greater problem arises where the object under inspection is of a flexible material such as paper, cloth, or a polymer film, as such objects might be bent, introducing the necessity of applying a correction that varies over the image. Finally many substrates such as paper or polymer films will stretch when subjected to printing or manufacturing processes. Images of such stretched items must be processed to correct for that stretching prior to inspection.

These problems are compounded by the fact that current high speed manufacturing processes require that the inspection process also be rapid. In some high speed printing processes, for example, as little as 20 milliseconds may be available to inspect each printed item. Using prior art registration and comparison techniques, extremely powerful and expensive computer hardware would have been required to perform the inspection as the printing occurred.

Another problem relates to the resolution of the digitized image. The digitized image consists of a large number of picture elements, or pixels, with a gray scale level assigned to each of those pixels. The term gray scale as used herein will be understood to include any digitized image where multiple bits are used to represent each pixel. A gray scale value could, therefore, represent multiple colors or even intensities of frequencies outside the visible spectrum. Traditionally if higher resolution was required, the number of pixels in a given area would be increased. This, of course, would require more sophisticated and expensive video, digitizing and image storage equipment.

## Summary of the Invention

In the present invention a polynomial warp of orders n and m of a first image in a u-v plane for comparison with a second image in an x-y plane is performed by preselecting $(n+1) \times (m+1)$ control points in the second image, precalculating a matrix [M] such that

$$[u] = [M][a]$$

and

$$[v] = [M][b]$$

where [u] and [v] are column vectors of $(n+1) \times (m+1)$ arbitrary (u,v) pairs and [a] and [b] are column vectors containing the warping coefficients for the polynomial warp, and precalculating and storing the inverse matrix $[M]^{-1}$ of [M]. The term precalculate will be understood to mean prior to performing the actual warping. The warping coefficients are calculated by calculating the matrix products of $[M]^{-1}$ with each of $[u']$ and $[v']$ where $[u']$ and $[v']$ are column vectors of the u and v values of the control points. The warping coefficients are then used to calculate (u,v) values for each pixel in the x-y plane and the gray scale value in the vicinity of each calculated (u,v) point is determined.

## Brief Description of the Drawings

Figure 1 is a schematic representation of a distorted image, a golden image, and warped images;

Figures 2 through 5 are schematic representations of a range of pixels used to describe a method of obtaining subpixel resolution;

Figures 6 through 9 are schematic representations of a range of pixels used to describe a second method of obtaining subpixel resolution;

Figure 10 is a block diagram of apparatus according to the invention for performing image warping; and

Figure 11 is a block diagram of apparatus according to the invention for performing image warping using zero-mean correlation.

## Detailed Description of the Preferred Embodiment

The invention will be described in the context of an article inspection system, but those skilled in the art will perceive that it could be used in any situation where two images are to be compared. Examples of fields in which it could be utilized are robotic vision and medical imaging. The technique could also be extended for use with three-dimensional images as well as two-dimensional ones.

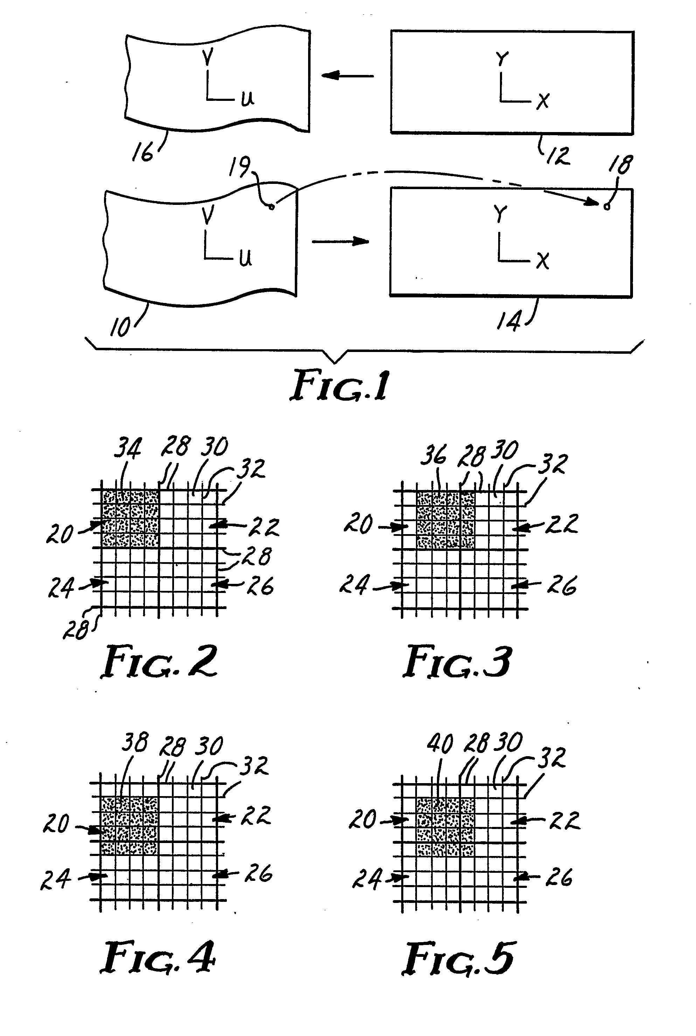

Figure 1 shows a distorted image 10 that may have been obtained as the result of scanning an item under inspection. As stated above, image 10 consists of a plurality of pixels, each with a gray scale value associated therewith. In a preferred embodiment, video equipment having a resolution of 512 by 368 pixels is used and each pixel corresponds to a physical size of approximately 0.108 mm by 0.216 mm on the object under inspection. The physical size to which each pixel corresponds may be easily altered by changing the focal length of the video equipment used to produce the image. Furthermore the number of pixels in the image may be altered by using higher resolution video equipment or by using multiple systems according to the invention, each to scan a different portion of the object under inspection. It will be understood that, as used herein, the term "image" includes the digital information required to form an image even though an actual visible image is not necessarily produced. Distorted image 10 is to be compared with a previously stored golden image 12. In order to make such a comparison, either image 10 or image 12 must be distorted so that comparable points in each image line up with one another. In other words, image 10 must be modified to form the image 14 that would have been produced if the item under inspection had been viewed in the same orientation to the camera and stretched to the same extent as was the item that was used to produce the golden image 12 when that image was produced. Alternatively the golden image 12 could be modified to form image 16 so that its apparent orientation and dimensions would be the same as those of the item used to produce image 10. In either case such modification of an image is known as image warping or simply warping.

Theoretically, a warping technique will create a one to one mapping between points in distorted image 10 and golden image 12. Thus each point (u,v) in distorted image 10 corresponds to a point (x,y) in golden image 12. In order to warp golden image 12 into the form of distorted image 10 the values of u and v for each (x,y) pair must be calculated. This is done by determining a pair of warping functions such that u and v are each functions of x and y. Using these functions, warped image 16 may be formed. Similarly, if distorted image 10 is to be warped into the form of golden image 12, each x and y may be calculated as functions of each u and v to form warped image 14. After the warping has been performed, the warped image may be compared with its corresponding unwarped image, i.e., warped image 16 would be compared with distorted image 10 or warped image 14 would be compared with golden image 12.

The one to one mapping described above can be guaranteed to occur only if the points in the images are true mathematical points of infinitesimal dimension. Since the "points" in a digitized image are actually pixels of finite size, a direct implementation of the procedure described above must select a location within a given pixel of distorted image 10 and determine the u and v values of that location. The u and v values thus calculated are then inserted in the warping formulae and x and y values are calculated. The position represented by the calculated values of x and y will lie within a pixel. That pixel is associated with the pixel originally selected in distorted image 10. The problem that arises is that it is possible for the locations selected in more than one pixel of distorted image 10 to map to positions within the same pixel of warped image 14, while some pixels of warped image 14 may not have any pixel of distorted image 10 mapped thereto.

An alternative procedure for warping distorted image 10 to the size and shape of golden image 12 may be used to overcome this problem. This procedure begins with the gray scale values of all of the pixels of warped image 14 undefined. The functions for determining the u and v values associated with a particular (x,y) pair are then applied to the x and y values of a particular pixel of warped image 14. For example the formulae may be applied to the x and y values of the pixel containing point 18 yielding the u and v values of the pixel of distorted image 10 containing point 19. The gray scale value of the pixel of distorted image 10 in which the (u,v) pair falls may then be assigned to the original pixel of image 14. In the example, the gray scale value of the pixel of image 10 containing point 19 will be assigned to the pixel of image 14 containing point 18. Alternatively, a weighted average of the gray scale values of several pixels in the vicinity of the pixel containing the point having the calculated values of u and v may be used rather than the gray scale value of the single pixel. For example the gray scale values of a four by two or four by four array of pixels around the calculated u-v point may be used. The process is repeated for each pixel of image 14. When the process is completed, warped image 14 may be compared with golden image 12. The process of generating the gray scale values in this manner is known as interpolation.

One known type of warping is called polynomial warping. The term polynomial arises from the fact that the equations relating u and v with x and y are polynomial equations. Since any differentiable function may be expressed as a polynomial, the use of polynomial warping allows quite general warping equations to be used. Polynomial warping formulae are often identified by the highest order terms used. Thus when warping from the golden image to the distorted image using a quadratic-cubic warp formula, the warping equations will include terms of $x^2$ and $y^3$. Similarly in a bicubic warp the warping equations will include terms as high as cubic in both x and y.

The warping equations can most easily be expressed as matrix equations. Thus, for associating an (x,y) pair of the golden image with a (u,v) pair in the distorted image the equations for warping of order n in the x terms and order m in the y terms may be expressed as:

$$(1) \quad u = [x^n \ldots 1] \begin{bmatrix} a_{nm} & \cdots & a_{no} \\ \cdot & & \cdot \\ \cdot & & \cdot \\ \cdot & & \cdot \\ a_{om} & \cdots & a_{oo} \end{bmatrix} \begin{bmatrix} y^m \\ \cdot \\ \cdot \\ \cdot \\ 1 \end{bmatrix}$$

$$(2) \quad v = [x^n \ldots 1] \begin{bmatrix} b_{nm} & \cdots & b_{no} \\ \cdot & & \cdot \\ \cdot & & \cdot \\ \cdot & & \cdot \\ b_{om} & \cdots & b_{oo} \end{bmatrix} \begin{bmatrix} y^m \\ \cdot \\ \cdot \\ \cdot \\ 1 \end{bmatrix}$$

It will be noted that the subscript convention in the matrices shown above is reversed from conventional notation. This is done to clarify the association of the particular terms in the matrix with the powers of x and y.

For the specific example of bicubic warping the matrix equations become:

$$(3) \qquad u = [x^3, x^2, x, 1] \begin{bmatrix} a_{33} & a_{32} & a_{31} & a_{30} \\ a_{23} & a_{22} & a_{21} & a_{20} \\ a_{13} & a_{12} & a_{11} & a_{10} \\ a_{03} & a_{02} & a_{01} & a_{00} \end{bmatrix} \begin{bmatrix} y^3 \\ y^2 \\ y \\ 1 \end{bmatrix}$$

$$(4) \qquad v = [x^3, x^2, x, 1] \begin{bmatrix} b_{33} & b_{32} & b_{31} & b_{30} \\ b_{23} & b_{22} & b_{21} & b_{20} \\ b_{13} & b_{12} & b_{11} & b_{10} \\ b_{03} & b_{02} & b_{01} & b_{00} \end{bmatrix} \begin{bmatrix} y^3 \\ y^2 \\ y \\ 1 \end{bmatrix}$$

These equations may be expanded to become:

(5) $\quad u = a_{33}x^3y^3 + a_{32}x^3y^2 + a_{31}x^3y + a_{30}x^3 + a_{23}x^2y^3 + a_{22}x^2y^2 + a_{21}x^2y + a_{20}x^2 + a_{13}xy^3 + a_{12}xy^2 + a_{11}xy + a_{10}x + a_{03}y^3 + a_{02}y^2 + a_{01}y + a_{00}$

(6) $\quad v = b_{33}x^3y^3 + b_{32}x^3y^2 + b_{31}x^3y + b_{30}x^3 + b_{23}x^2y^3 + b_{22}x^2y^2 + b_{21}x^2y + b_{20}x^2 + b_{13}xy^3 + b_{12}xy^2 + b_{11}xy + b_{10}x + b_{03}y^3 + b_{02}y^2 + b_{01}y + b_{00}$

Given these equations, the task that must be performed is to determine the a and b 's for a particular distorted image. This is done by choosing a set of "control points" in the golden image and locating those points in the distorted image. The a and b values required to warp the control points in the two images so that they coincide with each other may then be determined. Those coefficients then are used to generate an approximation of the warping for the remainder of the image. The warping is thus exact only for the control points and is an approximation for the remainder of the image.

The accuracy of the approximation is dependent upon the order of the warping. If the control points are located exactly, higher order warping will provide a more accurate approximation. Higher order warping is, however, more sensitive to small errors in location of the control points. Thus the use of higher order warping equations may actually provide a less accurate warped image in a real situation. Furthermore, the number of control points that must be located is equal to the number of coefficients in each of the warping matrices. Thus for bicubic warping 16 control points must be identified while for biquadratic warping only 9 control points must be identified. As more control points must be identified, more time is required to perform the necessary calculations. For both of these reasons the use of lower order warping formulae may be preferable. In actual practice, biquadratic or quadratic-linear warping may be adequate and even optimum. The remainder of the discussion herein, however, will be directed towards bicubic warping. Those skilled in the art will, however, readily be able to generalize the discussion of bicubic warping to either higher or lower order equations by adding or removing terms.

The first step in determining the warping matrices is to select the control points. In reality, rather than a single point, a "control point" will include a region of pixels containing a distinctive pattern. Since each pixel has a particular gray scale value assigned to it, the goal is to find a region of the distorted image that matches the gray scale values of the control region of the golden image. If the only requirement were to find a region of the distorted image that matched exactly the gray scale values of the control region of the golden image, the task would be relatively simple. Unfortunately there will seldom be such an exact match. The technique chosen, therefore, is to perform a correlation of the image of the control region with a larger region of the distorted image where the control point is expected to be found, and select the region of the distorted image most closely corresponding to the control region of the golden image as the control region of the distorted image. Even if there were no distortion within the control region of the distorted image and the pixel boundaries happened to have been selected in the same locations in the distorted image as the golden image, differences in illumination of the objects that produced the images would produce a difference. The technique for locating the control region must therefore take into account the possibility of differences in illumination.

In a preferred embodiment, the control regions are selected to be square regions 16 pixels wide and 16 pixels high. Therefore each control region contains 256 pixels. Each of those pixels has associated therewith a gray scale value in a predetermined range. That range may be, for example, -128 to 127. The control region may be regarded as a vector in a 256 dimensional space where the magnitude of each component of the vector corresponds to the gray scale value of one of the pixels. To match this control region of the golden image to the equivalent region of the distorted image, a larger region of the distorted image is selected. That larger region may be, for example, 32 pixels wide and 24 pixels high. The larger region is selected such that the control region is expected to lie inside it. The 16 by 16 pixel region can be placed in 17 different horizontal locations and 9 different vertical locations within a 32 by 24 pixel region with pixels of the two images aligned. Thus there are 153 different vectors within the 32 by 24 pixel region. The goal is then to select the one vector of those 153 that has a direction in the 256 dimensional space closest to the direction of the vector associated with the control region of the golden image. The directions of the vectors are to be compared rather than the overall values because the magnitude of the vectors will be affected by the brightness of the illumination. The direction of the vector will, however, be determined solely by the relative magnitudes of the components. It should be noted that the concepts of direction and length in a 256 dimensional space are abstract mathematical concepts and do not directly correspond to three dimensional directions and lengths.

The difference in direction of the vectors may be determined by taking the inner product of the vectors and dividing by the product of the magnitudes of the vectors. Doing this yields the cosine of the angle between the vectors. Thus two vectors pointing in exactly the same direction would yield a value of one. Since it is unlikely that any of the 153 vectors would actually produce a result of one, the vector producing the correlation peak, that is the result closest to one, is selected as representing the portion of the distorted image most closely corresponding to the control region of the golden image.

Once the control regions of the distorted image have been located and associated with the proper control regions of the golden image, the task is to determine what the values of a and b in Equations 3 and 4 must be in order to warp those points together. As stated above, the number of control points must be equal to the number of elements in the matrix of Equation 3 or the matrix of Equation 4. Those equations may then be applied for each of the control points. Thus, a system of 32 equations is created. If the location of a control point in the golden image is $(x_n, y_n)$ and in the distorted image is $(u_n, v_n)$, where n is the number of the control points, the first equation is created by substituting $u_1$, $x_1$, and $y_1$ for u, x, and y in Equation 3. Similarly, $u_2$ through $u_{16}$ are substituted for u in Equation 3 while the associated ones of $x_2$ through $x_{16}$ and $y_2$ through $y_{16}$ are substituted for x and y. In this way the first 16 equations are created. The second 16 equations are created by similarly substituting the various values of v, x, and y into Equation 4. These equations can then be expanded into the same format as Equations 5 and 6. After rearrangement these equations may then be seen to be equivalent to

**u = Ma**

**v = Mb**

In these equations the matrix **M** is the matrix defined in the Appendix and **u**, **v**, **a**, and **b** are defined as follows:

$$u = \begin{bmatrix} u_{16} \\ u_{15} \\ u_{14} \\ u_{13} \\ u_{12} \\ u_{11} \\ u_{10} \\ u_{9} \\ u_{8} \\ u_{7} \\ u_{6} \\ u_{5} \\ u_{4} \\ u_{3} \\ u_{2} \\ u_{1} \end{bmatrix} \qquad v = \begin{bmatrix} v_{16} \\ v_{15} \\ v_{14} \\ v_{13} \\ v_{12} \\ v_{11} \\ v_{10} \\ v_{9} \\ v_{8} \\ v_{7} \\ v_{6} \\ v_{5} \\ v_{4} \\ v_{3} \\ v_{2} \\ v_{1} \end{bmatrix} \qquad a = \begin{bmatrix} a_{33} \\ a_{32} \\ a_{31} \\ a_{30} \\ a_{23} \\ a_{22} \\ a_{21} \\ a_{20} \\ a_{13} \\ a_{12} \\ a_{11} \\ a_{10} \\ a_{03} \\ a_{02} \\ a_{01} \\ a_{00} \end{bmatrix} \qquad b = \begin{bmatrix} b_{33} \\ b_{32} \\ b_{31} \\ b_{30} \\ b_{23} \\ b_{22} \\ b_{21} \\ b_{20} \\ b_{13} \\ b_{12} \\ b_{11} \\ b_{10} \\ b_{03} \\ b_{02} \\ b_{01} \\ b_{00} \end{bmatrix}$$

If the inverse of **M** exists, the values of **a** and **b** may be determined by evaluating

$$a = M^{-1}u$$

and

$$b = M^{-1}v$$

The only problem then is to insure that in fact the inverse of **M** does exist. This may be done by proper selection of x and y values. In fact, only a very poor choice of control points would cause **M** to fail to have an inverse. Such a choice might be, for example, the choice of all of the control points such that they are collinear.

An important consideration arises from the fact that **M** contains only factors of x and y. Because this is the case and the golden image control points are preselected, $M^{-1}$ can be precomputed and stored in computer memory. Thus, it is not necessary to calculate the inverse matrix while the warping is being performed. All that is required is to locate the control points in the distorted image, perform the matrix multiplication to obtain the **a** and **b** values for the warping matrices, and then use those warping matrices, along with the interpolation scheme previously described, to do the actual image warping. The two images may then be compared to determine whether the item being tested meets the specification.

A problem arises if one of the control points cannot be located. One alternative is to select additional control points that may be used in place of one of the basic control points when that basic control point is not located. While this increases the probability that the warping will be able to be performed, it requires more inverse matrices to be precalculated and stored. For example, in the case of bicubic warping, if a 17th control point is added and the system is set up so that the extra control point may be substituted for any of the 16 basic control points, a total of 17 inverse matrices must be stored, corresponding to the 17 different sets of points that might be used. If 18 control points are used to yield the 16 required, a total of 153 combinations of points might be used, yielding 153 inverse matrices to be stored. Thus, the addition of redundant control points rapidly increases the number of matrices to be stored. Because of the necessity of performing the calculations rapidly, those matrices must be stored in the main memory of the computer because there is simply insufficient time to load them from a mass storage device. Thus, the addition of redundant control points rapidly increases the amount of main memory that must be available.

An alternative approach to provide redundancy while not increasing the memory requirements so severely, is to determine which control points most often cannot be located. An alternate control point is then selected for each of those. For example, if four of the control points prove more difficult to locate than the other 12, an alternate for each of those four may be selected. If one of those four then cannot be located, the alternate control point specifically associated with the point that was not found may be utilized. This provides the redundancy that allows the inspection to continue, while only requiring that a total of 16 inverse matrices be stored. The number of control points that require alternates will be dependent upon the item under inspection.

The procedure described above allows the calculation of the warping matrices to a resolution equal to the pixel size of the hardware used to produce the images. If a greater resolution is required, the traditional approach has been to substitute higher resolution equipment for producing the digitized image. As such substitutions are made, the price of the equipment required rapidly increases. A preferable system would allow subpixel resolution.

Figures 2 through 5 will be used to explain a method of providing subpixel location of features. In Figure 2 a region of an image includes four pixels, 20, 22, 24, and 26 separated by pixel boundaries such as pixel boundary 28. Each pixel may be regarded as including 16 subpixels such as subpixel 30. The subpixels are separated by subpixel boundaries such as subpixel boundary 32. The choice of 16 subpixels per pixel is arbitrary and other subpixel sizes could be chosen. As stated previously, each pixel has associated therewith a gray scale value. These gray scale values will be designated $g_{20}$, $g_{22}$, $g_{24}$, and $g_{26}$ for pixels 20, 22, 24, and 26, respectively.

The goal of the subpixel location strategy is to assign a gray scale value to pixel-sized pseudo-pixel regions that do not necessarily coincide with the actual pixels of the image. The pseudo-pixel region is shown as shaded region 34 in Figure 2. In Figure 2 shaded region 34 does coincide with pixel 20. Therefore, the gray scale value of shaded region 34 is equal to $g_{20}$.

In Figure 3 the shaded region has shifted to the right by one subpixel. It appears there as shaded region 36. The gray scale value assigned to pseudo-pixel 36 of Figure 3 is equal to $3g_{20}/4 + g_{22}/4$. This is because pseudo-pixel 36 occupies three quarters of the subpixels of pixel 20 and one quarter of the subpixels of pixel 22. It should be noted that this value is not necessarily the actual gray scale value of the physical region of the item under inspection corresponding to shaded region 36, but is a reasonable approximation. Similarly, the gray scale value assigned to pseudo-pixel 38 of Figure 4 is equal to $3g_{20}/4 + g_{24}/4$ and the gray scale value assigned to pseudo-pixel 40 of Figure 5 is equal to $9g_{20}/16 + 3g_{22}/16 + 3g_{24}/16 + g_{26}/16$. The gray scale values for all other possible pixel-sized pseudo-pixel regions coinciding with subpixel boundaries rather than pixel boundaries may then be similarly calculated. Using this information, sixteen templates of the control region of the golden image are prepared, one representing each location of the pseudo-pixels, relative to the actual pixels of the image. Each of these is compared to each of the 153 positions of the larger region of the distorted image in order to locate the control point to subpixel accuracy. This information may then be used to provide more accurate values in the warping matrix, and thus a more accurate warping of the image.

A disadvantage of the method of providing subpixel resolution described above is that, for purposes of the mathematical analysis, the images associated with the pseudo-pixel regions that do not align with the actual pixel boundaries are somewhat blurred. The result is that the control point might be found to be in a location associated with an image in which the pseudo-pixel regions used for analysis actually do align with the actual pixel boundaries more often than it should. A solution to this problem is to intentionally blur the image in which the pseudo-pixel regions are aligned with the actual pixels. It should be noted that this blurring is only for purposes of the mathematical analysis and that the actual stored image is not being degraded.

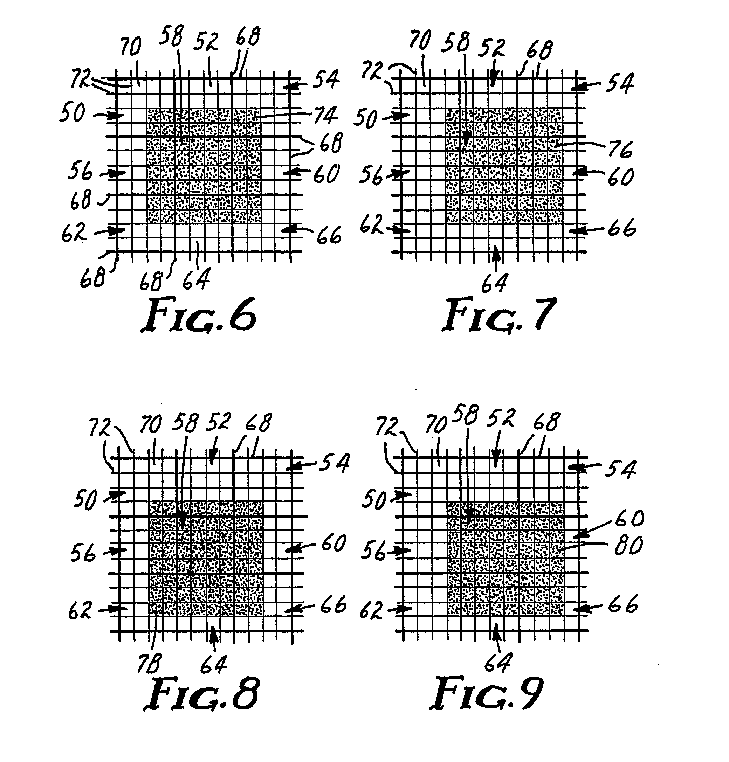

Figures 6, 7, 8, and 9 will be used to illustrate how such intentional blurring may be accomplished. The region of the image illustrated in Figures 6 through 9 includes nine pixels, 50, 52, 54, 56, 58, 60, 62, 64, and 66. These pixels are separated by pixel boundaries such as pixel boundary 68. Each pixel, as before, includes 16 subpixels such as subpixel 70. The subpixels are separated by subpixel boundaries such as subpixel boundary 72.

The method of obtaining the blur is to define a region equal to something larger than a full pixel. In the example given in Figures 6 through 9, the pseudo-pixel region is defined to be equal to four pixels in a two pixel by two pixel square. A gray scale value will be determined for this four pixel region, the value of which will then be assigned to the appropriate pixel-sized region. In Figure 6, shaded area 74 is centered on pixel 58. The gray scale value to be associated with pixel 58, for purposes of locating the control points, will be

equal to $[(g_{50} + g_{54} + g_{62} + g_{66})/4 + (g_{52} + g_{56} + g_{60} + g_{64})/2 + g_{58}]/4$. The final division by four is provided in order to normalize the gray scale value to be associated with pixel 58 to the same gray scale range as is used in the golden image.

In Figure 7 shaded region 76 is shifted one subpixel to the right from the location of shaded region 74 of Figure 6. The gray scale value derived from region 76 will be associated with the pixel-sized pseudo-pixel unit shifted one subpixel to the right from actual pixel 58. This value will be equal to $[(g_{50} + g_{62})/8 + (g_{52} + g_{64})/2 + 3(g_{54} + g_{66})/8 + (g_{56} + 3g_{60})/4 + g_{58}]/4$. Similarly the values for the pixel-sized pseudo-pixel area shifted one subpixel down from pixel 58 calculated from shaded region 78 of Figure 8 and that of the pixel-sized pseudo-pixel region shifted one subpixel down and one subpixel over from actual pixel 58, calculated using shaded region 80 of Figure 9 will be seen to be

$[(g_{50} + g_{54})/8 + g_{52}/4 + (g_{56} + g_{60})/2 + 3(g_{62} + g_{66})/8 + 3g_{64}/4 + g_{58}]/4$

and

$[g_{50}/16 + 6(g_{52} + g_{56})/4 + 3(g_{54} + g_{62})/16 + 3(g_{60} + g_{64})/4 + 9g_{66}/16 + g_{58}]/4$ ,

respectively. In a similar manner, a gray scale value may be calculated for every pixel-sized pseudo-pixel region either coinciding with an actual pixel or offset by a whole subpixel from the actual pixels. The values so derived are then used in the manner described with respect to the values derived in the method of Figures 2 through 5 to locate the control points in the distorted image.

The method described above for obtaining subpixel resolution will provide improved accuracy of analysis of the data. This improvement will, however, be at the expense of increased processing time. Furthermore other schemes using larger pseudo-pixels or other methods of weighing gray scale values may also be used. A decision on whether to use the subpixel resolution techniques must be made on the basis of the resolution required and the time available per item to be inspected in a particular situation.

Another technique that may be used independently or in conjunction with the subpixel resolution technique is zero mean correlation. The use of zero mean correlation will sharpen the correlation peaks making it easier to locate the control points. As with the subpixel resolution technique, the improvement comes at the expense of increased computations, so a choice as to whether to use it must be made in the context of a particular situation.

For purposes of the description of zero mean correlation N will be equal to the number of pixels in the control region. In the case of the 16 by 16 pixel control region discussed previously, N is equal to 256. The vector in N dimensional space with all elements equal to 1 will be denoted by the symbol **1**. The vector in N dimensional space describing the control region of the golden image will be denoted by $\underline{\bar{C}}$ and the mean value of the vector will be denoted by $\overline{C}$. $\overline{C}$ is defined as

$$\overline{C} = \frac{1}{N} \sum_{j=1}^{N} cj$$

The zero mean vector associated with $\underline{C}$ will be denoted by $\underline{C_0}$ and defined as

$\underline{C_0} = \underline{C} - \overline{C}\,\underline{1}$

where $\underline{1}$ is a vector with all components equal to 1.

Finally a vector **K** is defined to be the normalized zero mean of $\underline{C}$. That is

$\underline{K} = \underline{C_0}/\sqrt{<C_0, C_0>}$

where $<C_0, C_0>$ is the inner product of $\underline{C_0}$ with itself.

An important consequence of these definitions is that the mean of $\underline{K}$, $\overline{K}$, is equal to zero.

**D** will represent the vector from the region of the distorted image that is to be compared with the control region in the golden image for the purpose of locating the control region of the distorted image. By similar definitions to those made with respect to the control region of the golden image $\overline{D}$ will be defined to be the mean of **D** and

$\underline{D_0} = \underline{D} - \overline{D}\,\underline{1}$

The zero mean correlation then determines the angle in N dimensional space between the vector **K** and the vector $\underline{D_0}$. The highest value for the cosine of this angle will correspond to the correct choice for the location of the control region. The cosine of this angle designated $\beta$ herein, may be found as shown below.

$\cos \beta = <K, D_0>/\sqrt{<D_0, D_0>} = <K, D>/\sqrt{<d, d> - N\overline{D}^2}$

An approximation that saves considerable time, but has proved adequate in some applications, is to substitute $\overline{C}$ for $\overline{D}$ in the above equations. This approximation, when it can be used without loss of needed precision, will significantly reduce the processing time required to perform zero mean correlation. This is because the value of $\overline{C}$ is derived from the golden image, so may be precalculated, while the value of $\overline{D}$

must be calculated for each of the regions of the distorted image to be tested. In the example given previously, this would mean 153 different values of $\overline{D}$ must be calculated.

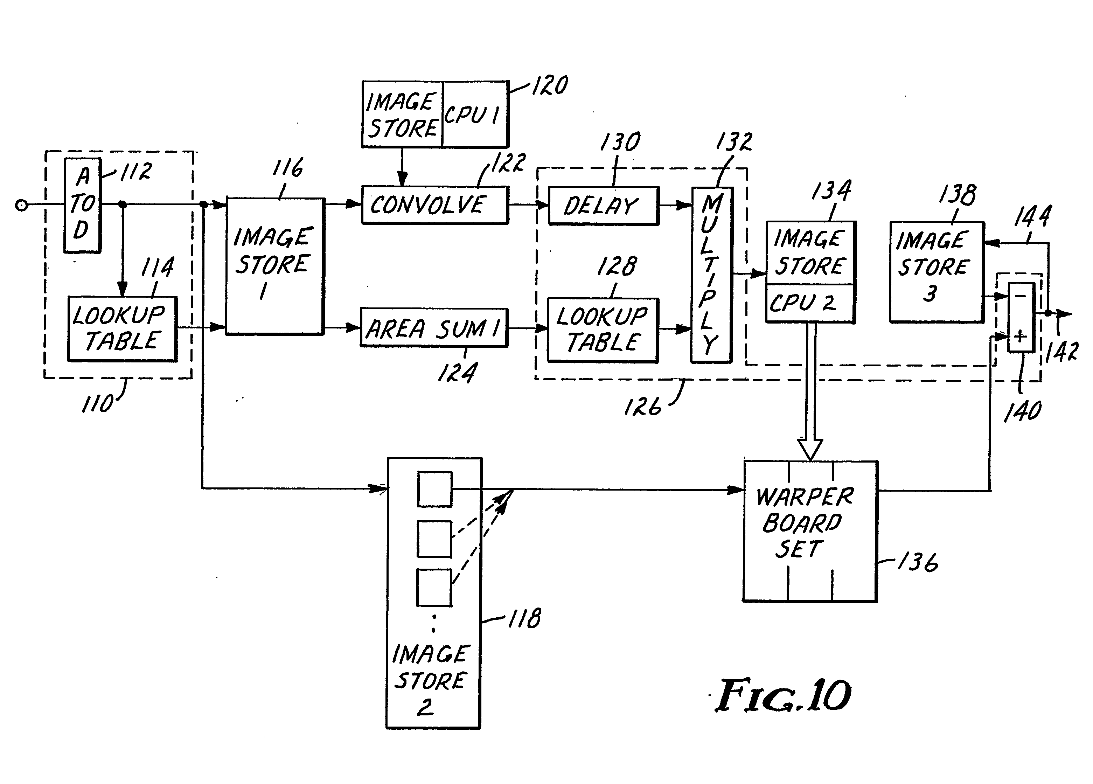

Figure 10 is a block diagram of a possible hardware implementation of the invention. The system of Figure 10 locates the control points in the distorted image through the use of a standard correlation rather than the zero mean correlation. In the apparatus of Figure 10 an analog input image is sent to an analog to digital converter 112. Analog to digital converter 112 digitizes the image and sends it to a circuit 114 that calculates the squares of the gray scale values associated with each of the pixels. In order to provide maximum speed, circuit 114 preferably utilizes a look-up table to calculate the squares rather than actually performing multiplications. In a preferred embodiment analog to digital converter 112 and circuit 114 may both be part of a single digitizer circuit which may, for example, be a MAX-SCAN digitizer marketed by Datacube, Inc., with offices at 4 Dearborn Road, Peabody, Massachusetts.

The gray scale values of all pixels and the squares of those gray scale values are then transmitted to electronic storage circuitry 116. The digitized images, but not the squared values, are also sent to a second electronic storage circuitry 118. Both electronic storage circuits 116 and 118 could be, for example, ROI-STORE 2048 image storage circuit marketed by Datacube, Inc. Due to the pipelined nature of the processing in the preferred embodiment, storage circuitry 118 must be able to store at least three images simultaneously.

The gray scale values are then transferred to convolver 122. Convolver 122 also receives the digitized information describing the control points in the golden image from circuit 120. Convolver 122 then calculates the inner products of the golden image control point vectors with all of the image vectors presenting potential locations of the control point from the distorted image. Convolver 122 may, for example, be a VFIR MKIII convolver from Datacube, Inc.

It should be noted that although circuit 112 is known as a convolver, it is capable of performing correlations also.

While convolver 122 is calculating those inner products, circuit 124 is calculating the sum of the squares of the gray scale values for each of the vectors representing potential locations for the control point in the distorted image. Circuit 124 may, for example, be a MAX-SIGMA summation circuit from Datacube, Inc. The results obtained from convolver 122 and circuit 124 are transmitted to another circuit 126. Within circuit 126 a circuit 128 calculates the square root of the reciprocal of the sums of the squares received from circuit 124. Preferably this reciprocal of the square root is calculated through the use of a look-up table. The results received by circuit 126 from convolver 122 are subjected to a delay circuitry 130. This delay need only be enough to allow circuit 128 to obtain the reciprocal of the square root from the look-up table. The output of circuits 128 and 130 are then sent to multiplier 132 which produces the product of its inputs. The output data from multiplier 132 are therefore the cosines of the angles between the vectors representing the control points in the golden image and the suspected control points in the distorted image. Circuit 126 may be a MAX-SP MKII circuit from Datacube, Inc.

The correlation cosines output by multiplier 132 are transmitted to circuit 134 which stores them and uses the information to determine which of the potential control points in the image represent the best approximation to the actual location of the control points in the distorted image. This information is then used to calculate the warping coefficients using the precalculated and stored information as described above.

The warping coefficients calculated by circuit 134 are then transferred to an image warper, which may be a WARPER MKII image warping circuit from Datacube, Inc., which also receives the stored distorted image from electronic storage circuitry 118. Warper 136 performs the actual warp using the interpolation method described above and transmits the warped image to comparison circuitry 140. Comparison circuitry 140 obtains the golden image from storage circuitry 138 and calculates the difference between the golden image and the warped image. The result of the comparison is an error image that is transmitted to analysis circuitry, not shown, on system output 142. In the preferred embodiment, the error image is also transmitted by connection 144 to electronic storage 138 where it is temporarily stored in case it is desired for additional analysis.

If circuitry 126 is a Datacube MAX-SP MKII circuit, comparison circuitry 140 is available as part of circuit 126. Electronic storage 138 may be another Datacube, Inc. ROI-STORE 2048 image storage circuit.

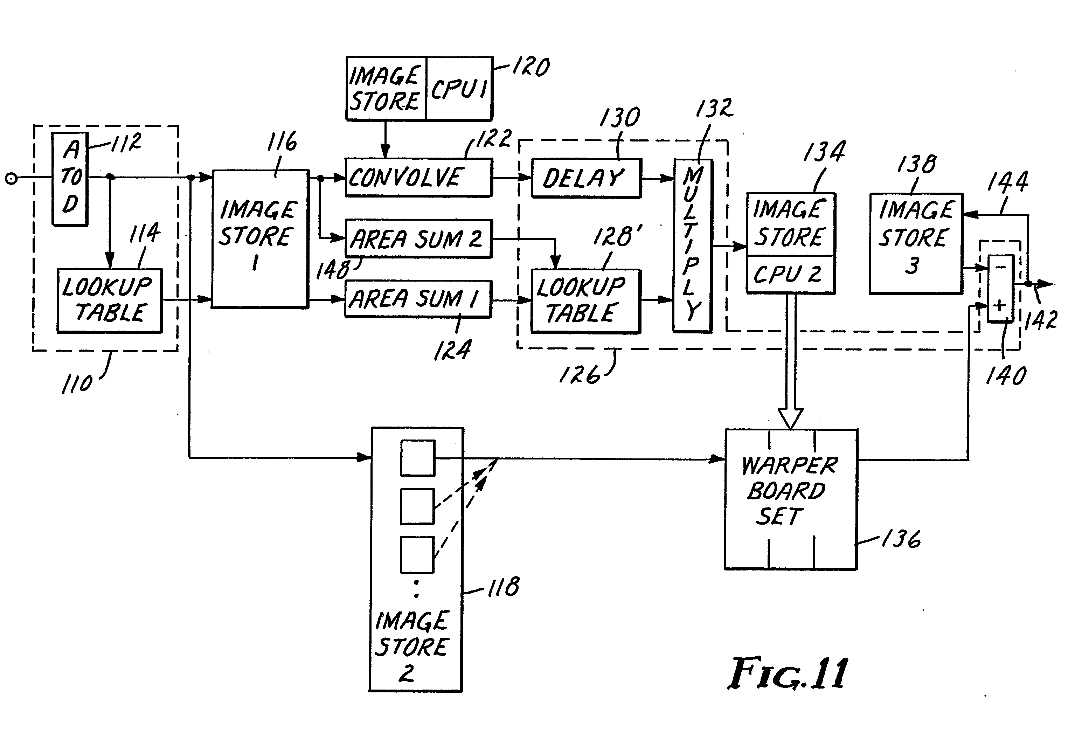

Figure 11 shows an implementation of the invention utilizing the zero-mean correlation previously described. The system of Figure 11 works in the same manner as the circuit of Figure 10 except that summing circuit 148 is added. Circuit 148 calculates the sum of the components of each of the vectors representing potential locations of the control points in the distorted image. Summing circuit 148 could also be a Datacube, Inc. MAX-SIGMA summation circuit.

The sums produced by circuit 148 are transmitted to circuit 128' which uses them to calculate the reciprocal of the magnitude or norm of the zero-mean vectors representing potential control points in the image. Like circuit 128 of Figure 10, circuit 128' preferably utilizes a look-up table to perform its function.

In the preferred embodiment the system works on several images at a time. Thus one image is being digitized while a previous image is being processed by convolver 122 circuit 126 and another is being warped by circuit 134 and warper 136. This significantly increases the amount of time available to perform the warping.

## Claims

1. A method of performing a polynomial warp of a first digitized image in a u-v plane for comparison with a second digitized image in an x-y plane each image comprising a plurality of pixels and each pixel having a gray scale value associated therewith, said method being according to the warping equations

$$u = [x^n ..1] [A] \begin{bmatrix} y^m \\ . \\ . \\ . \\ 1 \end{bmatrix}$$

and

$$v = [x^n ..1] [B] \begin{bmatrix} y^m \\ . \\ . \\ . \\ 1 \end{bmatrix}$$

where n and m are positive integers equal to the order of the warping and [A] and [B] are (n + 1) by (m + 1) matrices of warping coefficients, said method comprising the steps of:
preselecting a set of control points in said second image, said set including at least (n + 1) x (m + 1) points;
precalculating a matrix [M] such that
[u] = [M][a]
and
[v] = [M][b]
where [u] and [v] are column vectors of (n + 1) x (m + 1) arbitrary (u,v) pairs and [a] and [b] are column vectors containing the warping coefficients of [A] and [B] respectively;
precalculating the inverse, $[M]^{-1}$, of [M] and storing the values of $[M]^{-1}$;
locating (n + 1) x (m + 1) of said control points in said first image;
computing the values of said warping matrices by calculating
[a] = $[M]^{-1}[u']$
and
[b] = $[M]^{-1}[v']$,
where u' and v' are column vectors containing the u and v values of said control points;
calculating the (u,v) value of each pixel of the x-y plane by using said warping equations; and
determining the gray scale value in the vicinity of each calculated (u,v) point.

2. The method of Claim 1 wherein said step of locating said control points in said first image includes the step of correlating the image of each control point in said second image with a region of said first image in which the control point is expected to be found.

3. The method of Claim 2 wherein said control points are located in said first image to subpixel accuracy.

4. The method of Claim 3 wherein said subpixel accuracy is achieved by utilizing pseudo-pixels, each pseudo-pixel having assigned thereto a gray scale value, said gray scale values assigned to said pseudo-pixels being determined by taking weighted averages of said gray scale values associated with actual pixels.

5. The method of Claim 1 wherein said gray scale value in the vicinity of each calculated (u,v) point is equal to the gray scale value of the pixel containing said (u,v) point.

6. The method of Claim 1 wherein said gray scale value in the vicinity of each calculated (u,v) point is equal to a weighted average of the gray scale value of the pixel containing said (u,v) point and the gray scale values of the pixels surrounding said pixel containing said (u,v) point.

7. The method of Claim 1 wherein more than (n + 1) x (m + 1) control points are preselected in said second image and located in said first image.

8. Apparatus for performing a polynomial warp of a first digitized image in a u-v plane for comparison with a second digitized image in an x-y plane, a plurality of control points having been preselected in said second image, each image comprising a plurality of pixels and each pixel having a gray scale value associated therewith, said apparatus performing the warp according to the equations

$$u = [x^n ..1] \ [A] \begin{bmatrix} y^m \\ . \\ . \\ . \\ 1 \end{bmatrix}$$

and

$$v = [x^n ..1] \ [B] \begin{bmatrix} y^m \\ . \\ . \\ . \\ 1 \end{bmatrix}$$

where n and m are positive integers equal to the order of the warping and [A] and [B] are (n + 1) by (m + 1) matrices of warping coefficients, said apparatus comprising:
means for storing said first digitized image;
means for locating said control points in said first image and storing the calculated u and v values;
means for storing a matrix $[M]^{-1}$ such that
$[a] = [M]^{-1}[u']$
and
$[b] = [M]^{-1}[v']$
where [a] and [b] are column vectors containing the warping coefficients of [A] and [B] respectively and [u'] and [v'] are column vectors containing the u and v values of the control points;
means for multiplying $[M]^{-1}$ times [u'] to obtain the warping coefficients; and
means for utilizing said warping coefficients to calculate (u,v) values for each pixel in said second image and determine the gray scale values in the vicinity of said calculated (u,v) points.

9. The apparatus of Claim 8 wherein said means for locating said control points in said first image includes a convolver.

FIG.1

FIG.2

FIG.3

FIG.4

FIG.5

FIG.6

FIG.7

FIG.8

FIG.9

FIG.10

FIG.11